Europäisches Patentamt

European Patent Office

Office européen des brevets

(11) Numéro de publication : **0 146 533**
**B1**

(12) **FASCICULE DE BREVET EUROPÉEN**

(45) Date de publication du fascicule du brevet :
30.09.87

(21) Numéro de dépôt : 83901381.0

(22) Date de dépôt : 10.05.83

(86) Numéro de dépôt international :
PCT/FR 83/00089

(87) Numéro de publication internationale :
WO/8404231 (08.11.84 Gazette 84/26)

(51) Int. Cl.⁴ : **A 21 B   3/13**

(54) **MOULE A PATISSERIE A BORDS MOBILES.**

(30) Priorité : 04.05.83 FR 8307562

(43) Date de publication de la demande :
03.07.85 Bulletin 85/27

(45) Mention de la délivrance du brevet :
30.09.87 Bulletin 87/40

(84) Etats contractants désignés :
AT BE CH DE GB LI LU NL SE

(56) Documents cités :
FR-A- 2 041 948
GB-A-   753 068
US-A- 2 081 080

(73) Titulaire : WEBER, Dolorès
257 chemin de la Garrigue
F-83300 Draguignan (FR)

WEBER, Vincent
257 chemin de la Garrigue
F-83300 Draguignan (FR)

(72) Inventeur : WEBER, Dolorès
257 chemin de la Garrigue
F-83300 Draguignan (FR)
Inventeur : WEBER, Vincent
257 chemin de la Garrigue
F-83300 Draguignan (FR)

(74) Mandataire : Marek, Pierre et al
32, rue de la Loge
F-13002 Marseille (FR)

Jouve, 18, rue St-Denis, 75001 Paris, France

## Description

L'invention concerne un moule à pâtisserie.

Plus précisément, l'invention se rattache à un moule à pâtisserie du genre comportant un fond et un bord mobile par rapport à ce fond, les moules de ce type ayant notamment pour but de faciliter le démoulage des pâtisseries cuites à l'intérieur de ces derniers. Selon un premier mode d'exécution des dispositifs de cuisson de ce genre (GB-A-753,068), le moule comprend un fond et un bord amovible constitué de deux demi-parties hémicylindriques pourvues de moyens complémentaires d'assemblage et dont la base est munie d'un rebord demi-cylindrique permettant l'appui dudit fond, lorsque les différentes parties de ce moule sont assemblées.

Ce moule a notamment pour inconvénients :

de provoquer une cuisson irrégulière de la pâtisserie due au fait que son fond ne possède pas une épaisseur uniforme sur la totalité de sa surface, ce fond présentant, en effet, lorsque le moule est assemblé, une double épaisseur, à sa périphérie, constituée par l'addition de sa propre épaisseur et de celle du rebord sur lequel il repose ;

. de n'offrir aucune facilité favorisant le démoulage et la manipulation de son contenu cuit, en raison du fait que si la pâtisserie adhère à son fond, il n'existe, après séparation et enlèvement des deux demi-parties cylindriques constituant son bord, aucune prise permettant de l'immobiliser, par exemple afin de faciliter le passage d'une lame ou d'une spatule au-dessous de ladite pâtisserie, tandis qu'il ne comporte aucun organe permettant de le déplacer ou de le transporter d'un endroit à un autre.

Suivant un autre mode d'exécution des dispositifs connus (US-A-2.081.080), le moule est constitué par une pelle à enfourner constituant son fond et par un bord annulaire formé d'une seule pièce et articulé sur le manche de la pelle, de façon à pouvoir être soulevé en pivotant autour de son axe d'articulation.

Ce moule a notamment pour inconvénients :

d'être relativement complexe et coûteux ;

de provoquer une compression et une déformation du bord de la pâtisserie proche de l'axe d'articulation, lors du pivotement de sa paroi annulaire, en raison de l'extériorité de ce point d'articulation par rapport à ladite paroi ;

de nécessiter une exécution de la pelle à enfourner dans un matériau de forte épaisseur et donc relativement lourd, si l'on veut éviter une déformation du manche de ladite pelle sous le poids de la pâtisserie ;

d'être malaisé à transporter, compte tenu de l'excentration de l'organe de préhension.

Selon un troisième mode d'exécution des dispositifs connus (FR-A-2.041.948), le moule comprend un fond et une paroi tronconique exécutée en deux demi-parties dont l'une est formée d'une seule pièce avec le fond, tandis que l'autre est montée avec une aptitude de pivotement vers le bas et comporte, à sa base, une semelle en forme de croissant destinée à l'appui du bord libre demi-circulaire dudit fond.

Ce moule a aussi pour inconvénient d'entraîner une cuisson irrégulière de la pâtisserie en raison du fait que son fond ne possède pas une épaisseur uniforme sur la totalité de sa surface lorsqu'il se trouve disposé en position d'utilisation pour la cuisson, ce fond présentant, en effet, dans cette situation, une double épaisseur sur une demi-partie de sa périphérie, constituée par l'addition de sa propre épaisseur et de celle de la semelle d'appui de la demi-partie basculante. En outre, la demi-partie basculante de la paroi latérale du moule a une tendance naturelle à basculer vers le bas, sous l'effet de son propre poids, ce qui présente un risque de brûlure pour la personne qui manipule ou transporte ledit moule à sa sortie du four.

Un objet de la présente invention est donc de remédier aux inconvénients des moules du genre susmentionné comportant un fond et une paroi latérale amovible ou mobile, totalement ou en partie.

Selon la présente invention, cet objectif est atteint grâce à un moule comportant un fond et un bord mobile exécuté en deux demi-parties ou deux demi-bords, chacun desdits demi-bords constituant un demi-périmètre dudit bord mobile, ce moule étant remarquable par le fait que chacun des deux demi-bords constituant le bord mobile est fixé, par ses extrémités, au fond dudit moule au moyen d'articulations situées sur un axe commun, chacun des deux demi-bords étant monté avec une aptitude de pivotement en direction du haut par rapport audit fond. Le moule ainsi exécuté a pour avantages de permettre une cuisson parfaitement régulière de son contenu et de faciliter le démoulage de la pâtisserie après cuisson. En outre, il permet d'obtenir une meilleure coloration et cuisson de la croûte disposée en bordure de la pâtisserie, grâce au fait qu'il est possible de soulever légèrement les demi-bords mobiles, par exemple à mi-cuisson. Un autre avantage du moule selon l'invention est qu'il peut être utilisé comme plat à tarte, après que les deux demi-bords mobiles aient été relevés et placés perpendiculairement au fond dudit moule, de manière à constituer une anse permettant de le saisir et de le transporter.

Les buts, caractéristiques et avantages susmentionnés et d'autres encore, ressortiront mieux de la description qui suit et des dessins annexés dans lesquels :

La figure 1 est une vue de face du moule selon l'invention réalisé selon un premier mode d'exécution et représenté dans une position de cuisson suivant laquelle Les deux demi-bords pivotants reposent sur le fond.

La figure 2 est une vue partielle et en coupe selon la ligne 2-2 de la figure 1, montrant plus spécialement le mode de fixation et d'articulation des deux demi-bords mobiles sur le fond du moule.

La figure 3 est une vue en plan de la figure 1.

La figure 4 est une vue de face de ce moule, montrant les deux demi-bords mobiles en cours de pivotement vers le haut.

La figure 5 est une vue de face montrant les deux demi-bords pivotants relevés perpendiculairement au fond et disposés l'un à l'intérieur de l'autre, de manière à constituer une anse.

La figure 6 est une vue partielle et en plan, illustrant une première variante de réalisation du mode de fixation et d'articulation des deux demi-bords pivotants sur le fond du moule.

La figure 7 est une vue en coupe selon la ligne 7-7 de la figure 6.

La figure 8 est une vue partielle et en plan, d'une deuxième variante d'exécution du mode de fixation et d'articulation des deux demi-bords pivotants sur le fond du moule.

La figure 9 est une vue en coupe suivant la ligne 9-9 de la figure 8.

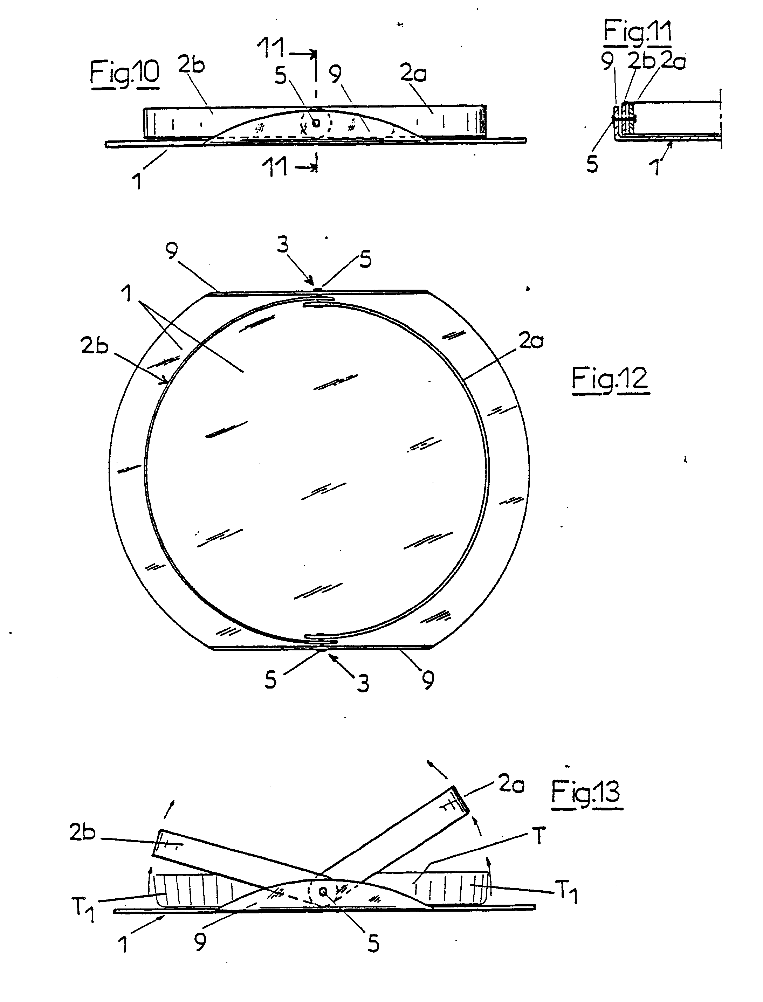

La figure 10 est une vue de face d'un autre mode d'exécution du moule selon l'invention.

La figure 11 est une vue partielle et en coupe selon la ligne 11-11 de la figure 10.

La figure 12 est une vue en plan de la figure 10.

La figure 13 est une vue de face montrant les deux demi-bords mobiles dans une position de soulèvement partiel découvrant le bord de la tarte reposant sur le fond du moule.

On se réfère auxdits dessins pour décrire des exemples de réalisation intéressants bien que nullement limitatifs, du moule à pâtisserie selon la présente invention.

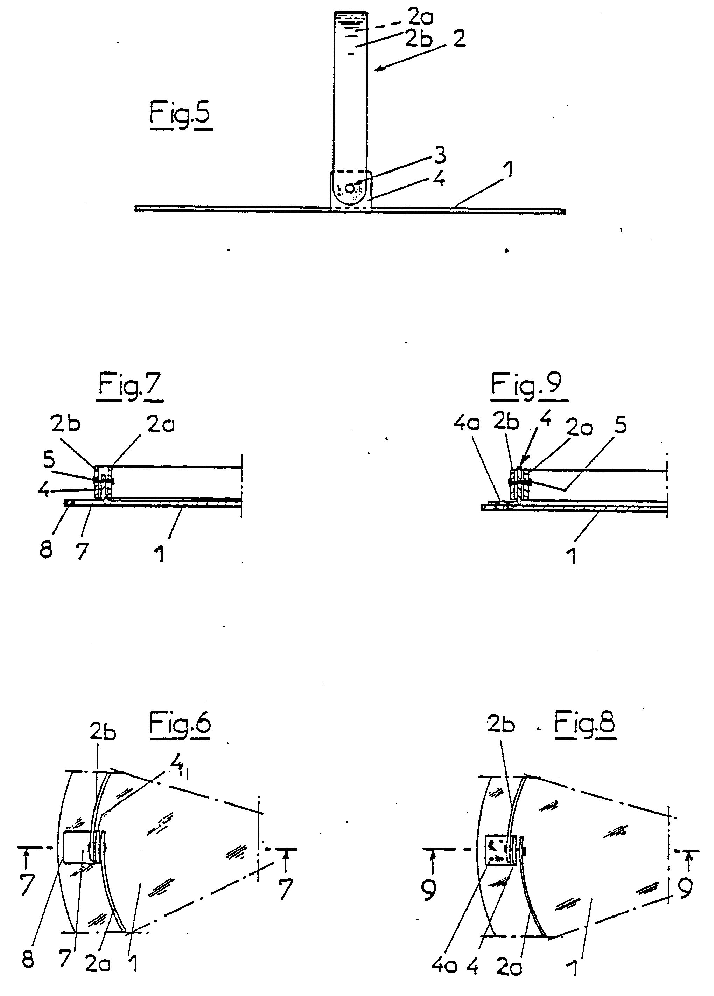

Ce moule comprend un fond 1, par exemple de forme circulaire, et une paroi annulaire ou bord mobile exécuté en deux demi-parties ou demi-bords 2a, 2b lesquels sont fixés au fond 1 au moyen de deux articulations 3, et sont montés avec une aptitude de pivotement et de soulèvement par rapport audit fond. De manière avantageuse, les deux demi-bords 2a, 2b sont montés avec une aptitude de pivotement vers le haut, sur au moins 90 degrés, jusqu'à une position suivant laquelle ils se trouvent placés perpendiculairement au fond 1 et disposés l'un à l'intérieur de l'autre, en constituant ainsi une anse 2 (figure 5).

Les articulations 3 sont disposées dans le plan médian du moule et, lorsque celui-ci est circulaire, elles sont donc diamétralement opposées, de sorte que lorsque les deux demi-bords mobiles 2a, 2b sont dressés verticalement, ils se trouvent également placés dans le plan médian du moule.

Les moyens de fixation des deux demi-parties pivotantes 2a, 2b comprennent, par exemple, selon un premier mode d'exécution convenant à la réalisation du moule dans des matériaux rigides supportant de fortes températures (cuivre, inox épais, etc.), deux pattes d'attache 4 diamétralement opposées et solidaires du fond 1, ces pattes d'attache formant un angle de 90 degrés ou un angle proche de 90 degrés par rapport audit fond. La fixation des deux demi-bords pivotants 2a, 2b sur les pattes d'attache 4 est obtenue au moyen d'axes d'articulation 5 traversant des perçages ménagés dans lesdites pattes d'attache et dans les extrémités desdits demi-bords.

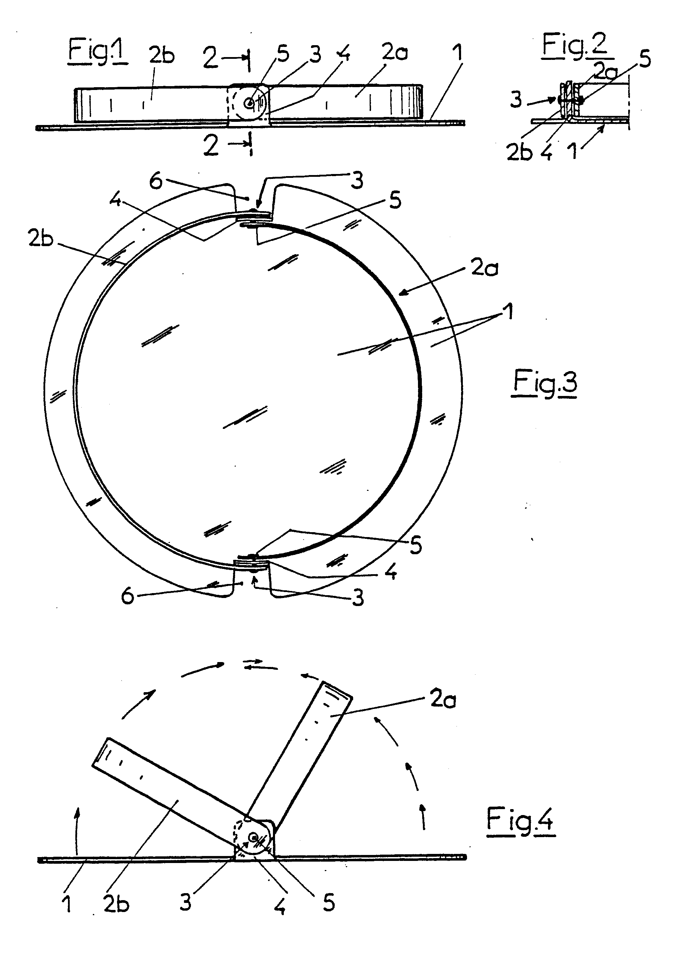

Les pattes d'attache 4 peuvent être obtenues par découpage de languettes dans le fond 1 et pliage de ces languettes vers le haut, en créant, sur le bord du moule, soit deux entailles ouvertes 6 diamétralement opposées (figure 3) dont les bords saillants sont, de préférence, arrondis, soit deux lumières fermées 7 laissant subsister un bord circonférentiel 8 (figure 6). Les pattes d'attache 4 peuvent aussi être constituées par de petites équerres rapportées par soudure ou autrement contre la face supérieure du fond 1, l'aile 4a desdites équerres au moyen de laquelle ces dernières sont fixées sur ledit fond étant, de préférence, dirigée vers l'extérieur.

Les deux demi-parties pivotantes 2a, 2b constituant la paroi latérale mobile du moule, peuvent être lisses ou cannelées. Elles peuvent, dans leur position d'appui sur le fond 1, avoir une orientation perpendiculaire audit fond ou être légèrement inclinées par rapport à la perpendiculaire audit fond, les pattes d'attache 4 ayant une orientation correspondante.

Selon un autre mode d'exécution, les moyens de fixation des deux demi-bords pivotants 2a, 2b comprennent deux ailes 9 formées par deux portions opposées du plateau constituant le fond 1 repliées vers le haut et formant, avec celui-ci, un angle de 90 degrés ou un angle proche de 90 degrés, chacune de ces ailes étant, dans le cas d'un plateau circulaire, formée par un segment circulaire plié vers le haut selon une corde dudit plateau. La hauteur des ailes ou segments pliés 9 correspond à la hauteur des deux demi-parties 2a, 2b ou sensiblement.

La fixation des deux demi-bords pivotants 2a, 2b sur les ailes ou segments circulaires 9 est obtenue au moyen des axes d'articulation 5 traversant des perçages ménagés dans lesdites ailes et dans les extrémités desdits demi-bords.

Les ailes d'attache et de renforcement 9 peuvent avoir une position perpendiculaire au fond 1 lorsque les deux demi-bords pivotants 2a, 2b sont eux-mêmes orientés perpendiculairement audit fond dans leur position de repos sur ce dernier, ou avoir une position légèrement inclinée par rapport à la perpendiculaire au fond 1 lorsque les deux demi-bords ont une orientation inclinée par rapport à cette perpendiculaire.

Cet agencement du moule lui confère une meilleure rigidité et convient à sa réalisation dans des matériaux ayant une propension à se déformer à la chaleur tels que tôle bleuie par exemple.

Un système permettant le dégagement latéral des bords mobiles 2a, 2b, préalablement à leur relèvement, peut être prévu.

Le mode d'utilisation du moule à pâtisserie à bords mobiles selon l'invention est le suivant :

le diamètre du fond du moule (pour un moule circulaire) représente celui de la pâte abaissée nécessaire pour foncer ce moule. Il faut néanmoins donner un quart de tour au fond du moule pour compenser la partie repliée lorsque le moule n'est pas complètement rond ou comporte des entailles

la pâte reposant bien à plat dans le fond du moule, cuit très régulièrement car la conduction de la chaleur est bien répartie

en cours de cuisson il est possible de soulever les demi-bords mobiles 2a, 2b, pour faire dorer davantage les bords T1 de la tarte T (figure 13).

Cette intervention peut aussi être exécutée pour décoller le fond d'une tarte qui a accroché, à l'aide d'une spatule

le démoulage de la tarte cuite s'effectue avec un ou deux bords mobiles relevés

le moule à bords mobiles peut être utilisé comme plat à tarte, les deux bords mobiles 2a, 2b étant relevés perpendiculairement au fond 1 pour former une anse 2 (figure 5).

## Revendications

1. Moule à pâtisserie permettant de démouler facilement le contenu cuit du moule en obtenant une cuisson régulière, et comportant un fond (1) et un bord mobile exécuté en deux demi-parties ou deux demi-bords (2a, 2b), chacun desdits demi-bords constituant un demi-périmètre dudit bord mobile, caractérisé en ce que chacun des deux demi-bords (2a, 2b) constituant le bord mobile est fixé par ses extrémités au fond (1) du moule au moyen d'articulations (3) situées sur un axe commun, chacun des deux demi-bords étant monté avec une aptitude de pivotement en direction du haut par rapport audit fond.

2. Moule selon la revendication 1, caractérisé en ce que le fond (1) déborde légèrement à l'extérieur des deux demi-bords (2a, 2b) constituant le bord mobile dudit moule, lorsque ceux-ci reposent sur ledit fond.

3. Moule selon la revendication 1, caractérisé en ce que les articulations (3) au moyen desquelles les deux demi-bords pivotants (2a, 2b) sont assujettis au fond (1) dudit moule, sont disposées dans le plan médian de ce dernier.

4. Moule suivant la revendication 1, caractérisé en ce que le système de fixation des deux demi-parties pivotantes (2a, 2b) constituant le bord mobile du moule, comprend deux languettes opposées (4) découpées dans le fond dudit moule et repliées vers le haut.

5. Moule selon la revendication 4, caractérisé en ce que les bords des lumières diamétralement opposées (7) résultant de l'exécution des languettes (4), se rejoignent par une découpe circulaire laissant subsister un bord circonférentiel (8).

6. Moule suivant la revendication 1, caractérisé en ce que le système de fixation des deux demi-parties pivotantes (2a, 2b) constituant le bord mobile du moule, comprend deux équerres opposées (4, 4a) rapportées par soudure ou autrement contre la face supérieure du fond (1) dudit moule ; l'aile (4a) desdites équerres fixée audit fond étant dirigée vers l'extérieur.

7. Moule selon la revendication 1, caractérisé en ce que les moyens de fixation des deux demi-parties pivotantes (2a, 2b) constituant le bord mobile du moule, comprennent deux ailes (9) formées par deux portions opposées du plateau constituant le fond (1) dudit moule, repliées vers le haut.

8. Moule selon la revendication 7 comportant un fond (1) de forme circulaire, caractérisé en ce que les ailes (9) sur lesquelles sont fixées, avec une aptitude de pivotement, les deux demi-parties mobiles (2a, 2b), sont constituées par deux segments circulaires opposés repliés vers le haut selon une corde dudit fond circulaire.

9. Moule suivant la revendication 1, caractérisé en ce que les deux demi-bords pivotants (2a, 2b) lisses ou cannelés, sont inclinés vers l'extérieur.

10. Moule selon la revendication 1, caractérisé en ce que les deux demi-parties pivotantes (2a, 2b) constituant le bord mobile du moule sont montées avec une aptitude de pivotement en direction du haut jusqu'à une position perpendiculaire ou sensiblement perpendiculaire au fond (1) du moule, l'une (2a) desdites demi-parties se glissant sous l'autre (2b), dans cette position, de manière à constituer une anse (2) et à permettre une transformation du moule en plat à tarte.

## Claims

1. Pastry mould permitting the easy removal from the mould of the cooked content of the mould with regular cooking, and comprising a base (1) and a movable rim constructed in two half-portions or two half-rims (2a, 2b), each of the said half-rims constituting a half-perimeter of the said movable rim, characterised in that each of the two half-rims (2a, 2b) constituting the movable rim is secured by its end to the base (1) of the mould by pivots (3) situated on a common axis, each of the two half-rims being mounted with a capability of pivoting upwardly with respect to the said base.

2. Mould according to Claim 1, characterised in that the base (1) extends slightly at the exterior of the two half-rims (2a, 2b) constituting the movable rim of the said mould, when the same rest on the said base.

3. Mould according to Claim 1, characterised in that the pivots (3) by means of which the two pivotable half-rims (2a, 2b) are coupled to the base (1) of the said mould, are disposed in the median plane of this latter.

4. Mould according to Claim 1, characterised in that the means for securing of the two pivotable halfportions (2a, 2b) constituting the movable rim of the mould, comprise two opposed tongues (4) cut out in the base of the said mould and bent upwardly.

5. Mould according to Claim 4, characterised in that the edges of the diametrically opposed windows (7) resulting from the production of the tongues (4) are joined by a circular cut leaving a circumferential edge (8).

6. Mould according to Claim 1, characterised in that the means for securing of the two pivotable halfportions (2a, 2b) constituting the movable rim of the mould, comprise two opposed square elements (4,4a) secured by welding or otherwise against the upper face of the base (1) of the said mould, the flange (4a) of the said square elements secured to the said base being positioned towards the exterior.

7. Mould according to Claim 1, characterised in that the means for securing of the two pivotable halfportions (2a, 2b) constituting the movable rim of the mould, comprise two flanges (9) formed by two opposed portions of the plate, constituting the base (1) of the said mould, bent upwardly.

8. Mould according to Claim 7 comprising a base (1) of circular shape, characterised in that the flanges (9) on which are secured, with a capability of pivoting, the two movable half-portions (2a, 2b), are constituted by two opposed circular segments bent upwardly along a chord of the said circular base.

9. Mould according to Claim 1, characterised in that the two pivotable smooth or fluted half-portions (2a, 2b) are inclined towards the exterior.

10. Mould according to Claim 1, characterised in that the two pivotable half-portions (2a, 2b) constituting the movable rim of the mould are mounted with a capability of pivoting upwardly to a position perpendicular or substantially perpendicular to the base (1) of the mould, one (2a), in this position, in a manner to constitute a handle (2) and to permit a transformation of the mould into a tart dish.

**Patentansprüche**

1. Backform, die ein leichtes Entfernen des gebackenen Inhalts aus der Form ermöglicht, wobei ein gleichmäßiges Backergebnis erzielt wird, und einen Boden (1) und einen in zwei Teilehälften oder zwei Randhälften (2a, 2b) ausgeführten, beweglichen Rand besitzt, wobei jede der beiden Randhälften eine Umfangshälfte des besagten beweglichen Randes bildet, dadurch gekennzeichnet, daß jede der beiden, den beweglichen Rand bildenden Randhälften (2a, 2b) an ihrem Ende an dem Boden (1) der Form mit Hilfe von auf einer gemeinsamen Achse sitzenden Gelenken (3) befestigt ist, wobei jede der beiden Randhälften in bezug auf den besagten Boden nach oben schwenkbar montiert ist.

2. Form nach Anspruch 1, dadurch gekennzeichnet, daß der Boden (1) an der Außenseite der beiden, den beweglichen Rand der besagten Form bildenden Randhälften (2a, 2b) leicht übersteht, wenn diese auf dem besagten Boden aufliegen.

3. Form nach Anspruch 1, dadurch gekennzeichnet, daß die Gelenke (3), womit die beiden schwenkbaren Randhälften (2a, 2b) an dem Boden (1) der besagten Form befestigt sind, in der Mittelebene dieser letzteren angeordnet sind.

4. Form nach Anspruch 1, dadurch gekennzeichnet, daß das System zur Befestigung der beiden, den beweglichen Rand der Form bildenden, schwenkbaren Teilehälften (2a, 2b), zwei in den Boden der besagten Form geschnittene und nach oben umgebogene, einander gegenüberliegende Lappen (4) besitzt.

5. Form nach Anspruch 4, dadurch gekennzeichnet, daß die Ränder der einander diametral gegenüberliegenden Löcher (7), die sich aus der Ausführung der Lappen (4) ergeben, durch einen kreisrunden Ausschnitt wieder aneinanderstoßen, wodurch ein Umfangsrand (8) stehen bleibt.

6. Form nach Anspruch 1, dadurch gekennzeichnet, daß das Befestigungssystem für die beiden, den beweglichen Rand der Form bildenden, schwenkbaren Teilehälften (2a, 2b) zwei durch Anschweißen oder anderswie an der Oberseite des Bodens (1) der besagten Form angestückte, einander gegenüberliegende Winkelbänder (4, 4a) besitzt ; wobei der an dem besagten Boden befestige Flügel (4a) der besagten Winkelbänder nach außen gerichtet ist.

7. Form nach Anspruch 1, dadurch gekennzeichnet, daß die Befestigungsmittel der beiden, den beweglichen Rand der Form bildenden, schwenkbaren Teilehälften (2a, 2b), zwei Flügel (9) besitzen, die aus zwei nach oben umgebogenen, einander gegenüberliegenden Abschnitten der den Boden (1) der besagten Form bildenden Platte bestehen.

8. Form nach Anspruch 7, bestehend aus einem Boden (1) kreisrunder Form, dadurch gekennzeichnet, daß die Flügel (9), auf welchen die beiden beweglichen Teilehälften (2a, 2b) schwenkbar befestigt sind, aus zwei einander gegenüberliegenden, entsprechend einer Sehne des besagten kreisrunden Bodens nach oben umgebogenen, kreisrunden Segmenten bestehen.

9. Form nach Anspruch 1, dadurch gekennzeichnet, daß die beiden glatten oder gerippten schwenkbaren Randhälften (2a, 2b) nach außen geneigt sind.

10. Form nach Anspruch 1, dadurch gekennzeichnet, daß die beiden, den beweglichen Rand der Form bildenden, schwenkbaren Teilehälften (2a, 2b) nach oben schwenkbar bis zu einer senkrechten oder beinahe senkrechten Stellung am Boden (1) der Form montiert sind, wobei die eine (2a) der beiden Teilehälften, in dieser Position, unter die andere (2b) gleitet, so daß sie einen Henkel (2) bilden und eine Verwandlung der Form in eine Tortenplatte ermöglichen.

Fig.1

Fig.2

Fig.3

Fig.4

Fig.5

Fig.7

Fig.9

Fig.6

Fig.8

Fig.10

Fig.11

Fig.12

Fig.13